# EUROPEAN PATENT APPLICATION

(11) **EP 4 818 958 A1**
(43) Date of publication of application: **07.10.2026**
(21) Application number: 25881501.8
(22) Date of filing: 16.09.2025
(51) Int. Cl.: G06F 30/20

(54) **COOLING RATE-BASED CASTING PROCESS SOLIDIFICATION SIMULATION METHOD**

(30) Priority: 25.10.2024 CN 202411497443
(71) Applicant: Chinalco Materials Application Research Institute Co., Ltd, Beijing 102209 (CN)
(72) Inventor: YU, Kangcai, Beijing 102209 (CN); WU, Yongfu, Beijing 102209 (CN); HUANG, Dongnan, Beijing 102209 (CN); LIU, Shengnan, Beijing 102209 (CN); LIU, Cheng, Beijing 102209 (CN); LI, Qing, Beijing 102209 (CN); ZHU, Heyu, Beijing 102209 (CN); REN, Simeng, Beijing 102209 (CN)
(74) Representative: V.O.
(86) International application number: PCT/CN2025/121662
(87) International publication number: WO 2026/086496

(57) **Abstract**

The present disclosure belongs to the technical field of numerical simulation of casting processes, and particularly relates to a method for simulating a casting process based on a cooling rate. The method disclosed in the present disclosure sets different solidification solid fraction curves according to different cooling rates during solidification, and controls latent heat release and mushy zone feeding behaviors during solidification through a solid fraction. The method specifically includes the following steps: (1) preliminarily evaluating cooling rates at different positions of an ingot; (2) determining a solidification solid fraction curve according to different cooling rates; (3) establishing an energy conservation equation; (4) establishing a momentum conservation equation; (5) solving coupled equations of a temperature field and a flow field; and (6) processing a simulation result.

## Description

### Cross-Reference to Related Application

The present disclosure claims the priority to Chinese Patent Application No. 2024114974436, filed with the China National Intellectual Property Administration on October 25, 2024 and entitled "Method for simulating solidification in casting process based on cooling rate", which is incorporated in its entirety herein by reference.

### Technical Field

The present disclosure belongs to the technical field of numerical simulation of casting processes, and particularly relates to a method for simulating a casting process based on a cooling rate.

### Background

Metal casting is a manufacturing process of cooling and solidifying molten metal in a mold to form a part or product with a specified shape and size, which plays a vital role in the metal processing industry. Numerical simulation of casting is a method for simulating and analyzing a casting process through computer technology, and plays a significant role in casting process optimization, defect prediction, and product quality improvement. The numerical simulation enables process optimization before casting production, and allows prediction and adjustment of various parameters during mold filling, solidification, and cooling, thus reducing trial-and-error costs and enhancing production efficiency. In addition, the numerical simulation can predict microstructure and macroscopic properties of a casting. Based on this, the most suitable material and process parameters can be selected to satisfy specific performance requirements. By simulating mold filling and solidification processes of metal, possible defects in castings, such as shrinkage cavities, shrinkage porosity, and cracks, can be predicted, which is of great significance for improving the technical level, product quality and market competitiveness of the casting industry.

The numerical simulation of casting involves the solidification process. A solidification solid fraction is a quantitative parameter describing a solidification degree. Solidification behaviors of alloys are generally described through an equilibrium solidification model or a Scheil model, as reported by Venneker et al. [Venneker B C H, Katgerman L. Modelling issues in macrosegregation predictions in direct chill castings[J]. , 2003, 2(2002): 149-159.]. Equilibrium solidification is used in a casting process as follows: ${f}_{s} \left(T\right) = \frac{1}{1 - k} ⋅ \frac{T - {T}_{liquid}}{T - {T}_{melt}}$ (1)

In the formula, T denotes a temperature, *fₛ* denotes a solid fraction and is a function of the temperature T, k denotes a solidification partition coefficient, *T_{liquid}* denotes a liquidus temperature, and *Tₘₑₗₜ* denotes a melting temperature of pure metal.

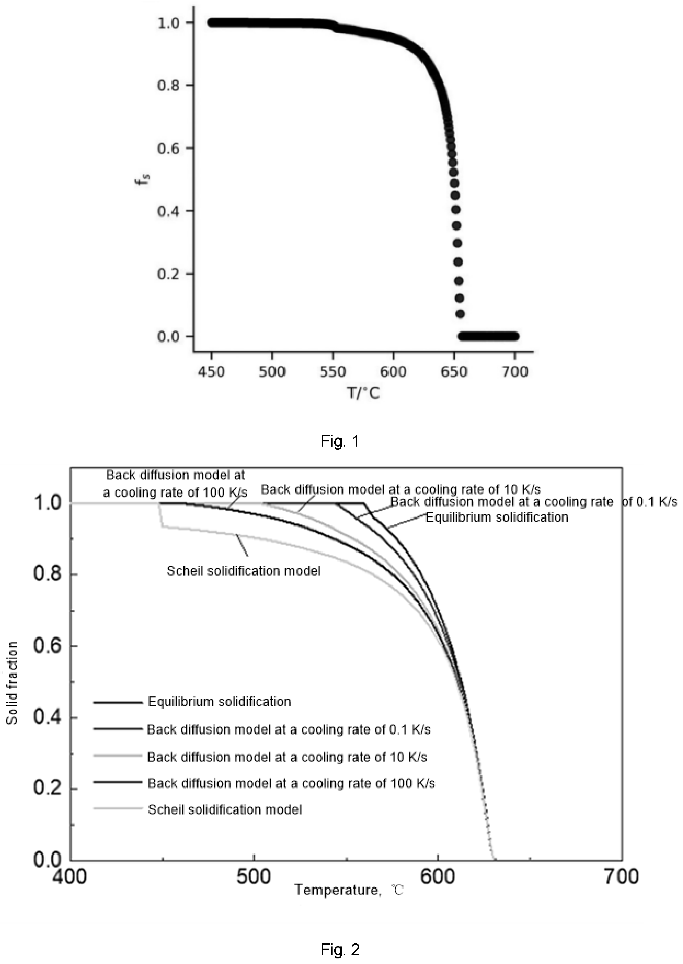

Or, a Scheil solidification model is used as reported by [Lebon G S B, Li H T, Patel J B, Assadi H, Fan Z. Elsevier Inc., 2020. Numerical modelling of melt-conditioned direct-chill casting[J]. Applied Mathematical Modelling, 2020, 77: 1310-1330.]. As shown in Fig. 1, the solid fraction is a function of the temperature T.

However, during metal solidification, the solidification solid fraction in casting is dependent on a cooling rate. For instance, at a low cooling rate, liquid diffusion is more sufficient, resulting in a higher solidus temperature. At a higher cooling rate, solute atoms have insufficient time to diffuse and most of them are dissolved in a matrix, leading to a lower solidus temperature, as shown in Fig. 2. Nevertheless, during solidification, the cooling rate of inside an ingot is often non-uniform due to cooling constraints. Typically, the cooling rate of a core of the ingot is lower, and that of a surface of the ingot is higher. It is irrational to apply a single solidification solid fraction model to the entire ingot during casting, which leads to inaccurate simulation results and may mislead solidification research or production guidance.

### Summary

In view of the problems in the prior art, the present disclosure provides a method for simulating a casting process based on a cooling rate. The method fully takes into account cooling rates of different zones of an ingot in the casting process, determines solid fractions of the corresponding zones according to the different cooling rates, and further simulates heat release during solidification and melt flow in a mushy zone in the casting process according to the solid fractions. The present disclosure specifically includes the following content:
The method for simulating a casting process based on a cooling rate includes the following steps:
S1, obtaining cooling rates: obtaining the cooling rates *Ṫ* at different positions P of an ingot, and establishing a functional relationship between the cooling rates *Ṫ* and the positions P of the ingot;
S2, obtaining a solidification solid fraction curve: obtaining a solidification solid fraction curve *fₛ*(*T, Ṫ*) according to the different cooling rates *Ṫ*, or determining a solidification solid fraction curve *fₛ*(*T, P*) according to the positions *P* of the ingot, where T denotes a temperature;
S3, releasing latent heat of crystallization proportionally according to a solid fraction, and establishing an energy conservation equation: $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T, \dot{T}\right)\right)}{\partial t}+∇\left({ρUf}_{s}\left(T, \dot{T}\right)\right)\right] ,$ (2) or, $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T, P\right)\right)}{\partial t}+∇⋅\left({ρUf}_{s}\left(T, P\right)\right)\right] ,$ where
   *ρ* denotes a density;
   *U* denotes a velocity vector;
   *t* denotes time;
   *h* denotes an enthalpy;
   *λ* denotes a thermal conductivity;
   L*_{f}* denotes the latent heat of the crystallization; and
   *fₛ* denotes the solid fraction;
   S4, simulating flow of a liquid phase in a dendrite network through permeation during solidification, where a permeability of the permeation is related to the solid fraction, and establishing a momentum conservation equation: $\frac{\partial \left(ρU\right)}{\partial t} + ∇ ⋅ \left(ρUU\right) = - ∇ P + ∇ ⋅ \left({μ}_{eff}∇U\right) + ρg - {S}_{Darcy}$ (3). where
      *µ_{eff}* denotes an effective viscosity; and
      *S_{Darcy}* denotes a Darcy source term for permeation, and is a function of the solid fraction; and
      S5, establishing, in combination with a specific shape of the ingot, a coupled solving model for a temperature field and a flow field according to the energy conservation equation and the momentum conservation equation, and further calculating the temperature field and the flow field during solidification in the casting process.

In some embodiments, the obtaining the cooling rates *Ṫ* at different positions P of the ingot in S1 includes: performing a measurement by embedding thermocouples, or performing a calculation by establishing a numerical simulation model for the casting process.

In some embodiments, the establishing the numerical simulation model for the casting process includes: establishing, based on a Scheil solidification model, a Level model, or another suitable model, the numerical simulation model for the casting process in combination with the shape of the ingot. It should be noted that the model used in the step is not limited to the Scheil solidification model or the Level model, which are merely two feasible instances provided herein.

In some embodiments, the calculating the solidification solid fraction curve *fₛ*(*T*, *Ṫ*) of a corresponding position P of the ingot according to the different cooling rates *Ṫ* in S2 includes: calculating, according to the different cooling rates *Ṫ*, solidification curves *fₛ*(*T*, *Ṫ*) corresponding to the different cooling rates *Ṫ* respectively through a Back diffusion model via Thermo-calc or other software. It should be noted that the software used in the step is not limited to the Thermo-calc software, which is merely one feasible instance provided herein.

In some embodiments, the calculating the solidification solid fraction curve *fₛ*(*T*, *Ṫ*) of a corresponding position P of the ingot according to the different cooling rates *Ṫ* in S2 includes: measuring solidification curves *fₛ*(*T*, *Ṫ*) at the different cooling rates *Ṫ* through differential scanning calorimetry (DSC).

In some embodiments, in S4, a Blake-Kozeny model is used to describe the Darcy source term. It should be noted that the model used in the step is not limited to the Blake-Kozeny model, which is merely one feasible instance provided herein.

In some embodiments, in S5, FLUENT software or other software is used to establish the coupled solving model for the temperature field and the flow field in combination with the shape of the ingot. It should be noted that the software used in the step is not limited to the FLUENT software, which is merely one feasible instance provided herein.

In some embodiments, the method further includes S6: processing a simulation result of the casting process. The processing includes: extracting, according to the temperature field and the flow field calculated in S5 and in combination with different solid fractions, liquid pool morphology at different positions; and obtaining heat release of solidification in the casting process.

The present disclosure has the following beneficial effects:
The present disclosure provides the method for simulating a casting process based on a cooling rate. The method disclosed in the present disclosure sets different solidification solid fraction curves according to different cooling rates during solidification, and controls latent heat release and mushy zone feeding behaviors during solidification through the solid fraction. The method specifically includes the following steps: (1) preliminarily evaluating the cooling rates at the different positions of the ingot; (2) determining the solidification solid fraction curve according to the different cooling rates; (3) establishing the energy conservation equation; (4) establishing the momentum conservation equation; (5) solving the coupled equations of the temperature field and the flow field; and (6) processing the simulation result. The present disclosure considers influence of different cooling rates on a solidification solid fraction in the casting process, thus more accurately reflecting heat release and mushy zone behaviors during solidification. The simulation result is more consistent with an actual condition, which improves accuracy of solidification simulation.

### Brief Description of the Drawings

Fig. 1 shows a Scheil solidification model used for semi-continuous casting simulation;
Fig. 2 shows influence of a cooling rate on a solid fraction during solidification;
Fig. 3 shows measurement results of a cooling rate of a 7050 alloy with a diameter of 300 mm;
Fig. 4 shows measurement and simulation results of a liquid pool of an ingot of a 7050 alloy with a diameter of 300 mm; and
Fig. 5 shows a cooling rate distribution of a slab ingot of a 5A06 alloy with a specification of 420 mm×1620 mm.

### Detailed Description of the Embodiments

The present disclosure is described in detail below in conjunction with accompanying drawings and specific embodiments. The following embodiments do not limit the invention content described in claims. In addition, all the contents described in the following embodiments are not limited to those essential to the solution of the invention as recited in the claims.

### Embodiment 1

Numerical simulation of solidification in a semi-continuous casting process of a round ingot of 7050 aluminum alloy is performed through a simulation method disclosed in the present disclosure. An ingot diameter is 300 mm, a casting temperature is 690°C, a casting velocity is 60 mm/min, a cooling water flow rate is 75 L/min, and a cooling water temperature is 25°C.

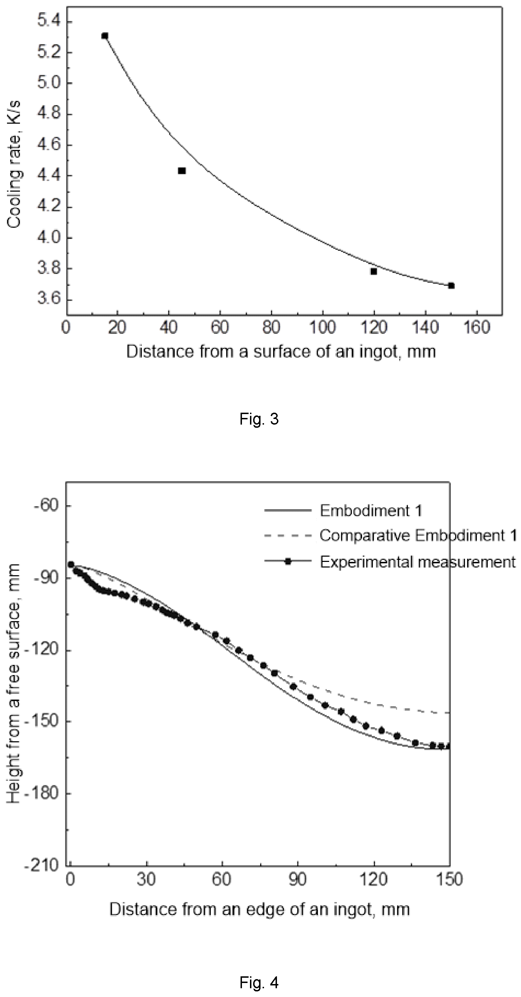

The simulation method specifically includes the following steps:
S1, cooling rates are obtained. In the casting process, cooling curves at different radial positions of an ingot are measured by embedding thermocouples, the cooling rates at different positions of the ingot are obtained, and a distribution law of the cooling rates in a radial direction of the ingot is obtained through fitting, as shown in Fig. 3.
S2, a solidification solid fraction curve is obtained. According to the different cooling rates, solidification curves *fₛ*(*T, T*) at the cooling rates are calculated through a Back diffusion model of Thermo-calc software, and a solidus temperature is determined. As *Ṫ* denotes a relational function of a position P of the ingot, symmetry of the round ingot is considered to establish a function *fₛ*(*T, r*) correlating a solid fraction with a temperature and a radial distance *r* of the ingot.
S3, an energy conservation equation is established as follows: $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T, r\right)\right)}{\partial t}+∇⋅\left(ρU{f}_{s}\left(T, r\right)\right)\right]$ (4).

In the equation, *ρ* denotes a crystal density; *U* denotes a crystallization velocity vector; *t* denotes crystallization time; *h* denotes a crystal enthalpy; *λ* denotes a thermal conductivity of a crystal; L*_{f}* denotes latent heat of the crystallization; and *fₛ* denotes the solid fraction.

S4, a Blake-Kozeny model is used to describe a Darcy source term, and a momentum conservation equation is established as follows: $\frac{\partial \left(ρU\right)}{\partial t} + ∇ ⋅ \left(ρUU\right) = - ∇ P + ∇ ⋅ \left({μ}_{eff}∇U\right) + ρg - \left(U-{U}_{s}\right) \frac{{\left(1-{f}_{s}\left(T, r\right)\right)}^{3}}{{f}_{s} {\left(T, r\right)}^{2}} {K}_{p}$ (5).

In the equation, *µ_{eff}* denotes an effective viscosity; and the final term $\left(U-{U}_{s}\right) \frac{{\left(1-{f}_{s}\left(T, r\right)\right)}^{3}}{{f}_{s} {\left(T, r\right)}^{2}} {K}_{p}$ denotes the Darcy source term, and *Kₚ* denotes a permeability of a mushy zone.

S5, a coupled solving model for a temperature field and a flow field of a semi-continuous casting process of 7050 aluminum alloy of Φ300 mm is established through FLUENT software, and solving and calculating are performed through a computer, to obtain the temperature field and the flow field.

S6, after calculation is completed, a numerical simulation result is processed, and liquid pool morphology is extracted according to different solid fractions at different positions.

### Embodiment 2

Numerical simulation of solidification in a semi-continuous casting process of a slab ingot of 420 mm×1620 mm of 5A06 aluminum alloy is performed through the method disclosed in the present disclosure. A casting temperature is 700°C, a casting velocity is 50 mm/min, a cooling water flow rate is 20 m³/h, and a cooling water temperature is 20°C.

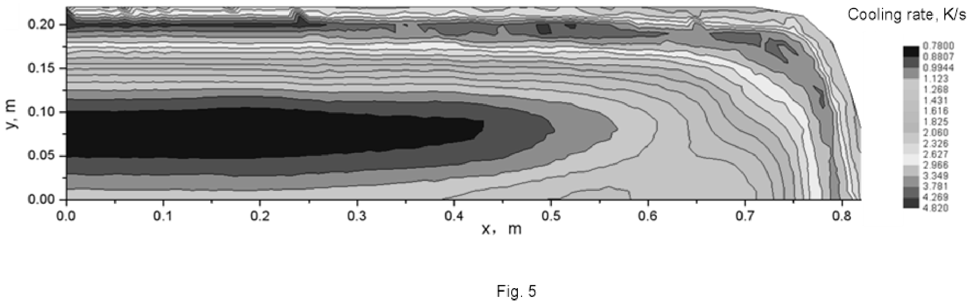

The method includes the following steps:
S1, based on a Scheil solidification model, a numerical simulation model of a casting process of 5A06 with dimensions of 420 mm×1620 mm is established, and a cooling rate distribution in the casting process is obtained, as shown in Fig. 5.
S2, according to different cooling rates, solidification curves *fₛ*(*T,Ṫ*) at 0.5 K/s, 1 K/s, 2 K/s, 3 K/s, 4 K/s, and 5 K/s are obtained through differential scanning calorimetry (DSC) experimental measurement, and a solidus temperature is determined. Solidification curves *fₛ*(*T, Ṫ*) at other cooling rates are obtained through interpolation and table lookup. In a steady state, the cooling rate T is a relational function of a position. A 1/4 symmetry model is established by considering the symmetry of the slab ingot, and a relational function *fₛ*(*T, x, y*) between a solid fraction, a temperature and a position (x,y) of the ingot is formed.
S3, an energy conservation equation is established as follows: $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T, x, y\right)\right)}{\partial t}+∇⋅\left(ρU{f}_{s}\left(T, x, y\right)\right)\right]$ (8).
S4, a Blake-Kozeny model is used to describe a Darcy source term, and a momentum conservation equation is established as follows: $\frac{\partial \left(ρU\right)}{\partial t} + ∇ ⋅ \left(ρUU\right) = - ∇ P + ∇ ⋅ \left({μ}_{eff}∇U\right) + ρg - \left(U-{U}_{s}\right) \frac{{\left(1-{f}_{s}\left(T, x, y\right)\right)}^{3}}{{f}_{s} {\left(T, x, y\right)}^{2}} {K}_{p}$ (9).

In the equation, the final term denotes the Darcy source term, and *Kₚ* denotes a permeability of a mushy zone.

S5, a coupled solving model for a temperature field and a flow field of a semi-continuous casting process of 5A06 aluminum alloy with dimensions of 420 mm×1620 mm is established through FLUENT software, and solving and calculating are performed through a computer, to obtain the temperature field and the flow field.

S6, after calculation is completed, a numerical simulation result is analyzed, and the cooling rate is evaluated. If the result has a significant deviation from a result of step 1, step 1 is re-performed, the cooling rate is updated, and steps 2 to 6 are repeated until the cooling rate is stable. Numerical simulation is performed through the method of the example. The method fully considers influence of different cooling rates on a solidification solid fraction in the casting process, thus more accurately reflecting heat release behaviors during solidification. The simulation result is more consistent with an actual condition, which can effectively improve accuracy of solidification simulation.

### Comparative Embodiment 1

The comparative embodiment uses an equilibrium solidification model to describe a solidification behavior of an alloy, and uses a casting method and an ingot specification consistent with those of Embodiment 1. That is, numerical simulation is performed on semi-continuous casting of a round ingot of 7050 aluminum alloy. An ingot diameter is 300 mm, a casting temperature is 690°C, a casting velocity is 60 mm/min, a cooling water flow rate is 75 L/min, and a cooling water temperature is 25°C.

The Comparative Embodiment specifically includes the following steps:
S1, a solid fraction of 7050 alloy is calculated through the equilibrium solidification model (through Formula 1). A liquid phase temperature of the alloy is 630°C, a liquidus temperature of pure aluminum is 660°C, and a partition coefficient is 0.185. A solidification curve obtained from the model is used for solidification of the entire ingot.
S2, an energy conservation equation is established as follows: $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T\right)\right)}{\partial t}+∇⋅\left(ρU{f}_{s}\left(T\right)\right)\right]$ (6).
S3, a Blake-Kozeny model is used to describe a Darcy source term, and a momentum conservation equation is established as follows: $\frac{\partial \left(ρU\right)}{\partial t} + ∇ ⋅ \left(ρUU\right) = - ∇ P + ∇ ⋅ \left({μ}_{eff}∇U\right) + ρg - \left(U-{U}_{s}\right) \frac{{\left(1-{f}_{s}\left(T\right)\right)}^{3}}{{f}_{s} {\left(T\right)}^{2}} {K}_{p}$ (7).

In the equation, the final term denotes the Darcy source term, and *Kₚ* denotes a permeability of a mushy zone.

S4, a coupled solving model for a temperature field and a flow field of a semi-continuous casting process of 7050 aluminum alloy of Φ300 mm is established through FLUENT software, and solving and calculating are performed through a computer, to obtain the temperature field and the flow field.

S5, after calculation is completed, a numerical simulation result is processed, and liquid pool morphology is extracted according to an isothermal level of a solidus temperature T=523°C.

Predicted liquid pool morphology results of Embodiment 1 and Comparative Embodiment 1 and experimental measurement results are shown in Fig. 4. Through comparison with the experimental measurement results, it can be seen that the simulation method of Embodiment 1 achieves higher accuracy in predicting the liquid pool morphology than that of Comparative Embodiment 1.

The above description of the disclosed embodiments enables those skilled in the art to implement or use the present disclosure. Various modifications to the embodiments are readily obvious to those skilled in the art, and general principles defined herein can be implemented in other embodiments without departing from the spirit or scope of the present disclosure. Thus, the present disclosure is not limited to the embodiments shown herein and falls within a widest scope consistent with principles and novel features disclosed herein.

### Industrial Applicability

Solutions provided by embodiments of the present disclosure can be applied to the technical field of numerical simulation of casting processes. In the embodiments of the present disclosure, different solidification solid fraction curves are set according to different cooling rates during solidification, and further heat release of solidification and melt flow in a mushy zone in a casting process are simulated based on a solid fraction. The present disclosure fully considers influence of different cooling rates on a solidification solid fraction in the casting process, thus more accurately reflecting heat release and mushy zone behaviors during solidification. The simulation result is more consistent with an actual condition, which improves accuracy of solidification simulation.

## Claims

1. A method for simulating a casting process based on a cooling rate, comprising the following steps:
S1, obtaining cooling rates: obtaining the cooling rates *Ṫ* at different positions P of an ingot, and establishing a functional relationship between the cooling rates *Ṫ* and the positions P of the ingot;
S2, obtaining a solidification solid fraction curve: obtaining a solidification solid fraction curve *fₛ*(*T, Ṫ*) according to the different cooling rates *Ṫ*, or determining a solidification solid fraction curve *fₛ*(*T,P*) according to the positions P of the ingot, wherein T denotes a temperature;
S3, releasing latent heat of crystallization proportionally according to a solid fraction, and establishing an energy conservation equation: $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T, \dot{T}\right)\right)}{\partial t}+∇⋅\left({ρUf}_{s}\left(T, \dot{T}\right)\right)\right] ,$ or $\frac{\partial \left(ρh\right)}{\partial t} + ∇ ⋅ \left(ρUh\right) = ∇ ⋅ \left(λ∇T\right) + {L}_{f} \left[\frac{\partial \left({ρf}_{s}\left(T, P\right)\right)}{\partial t}+∇⋅\left({ρUf}_{s}\left(T, P\right)\right)\right] ,$ wherein
*ρ* denotes a density;
*U* denotes a velocity vector;
*t* denotes time;
*h* denotes an enthalpy;
*λ* denotes a thermal conductivity;
L*_{f}* denotes the latent heat of the crystallization; and
*fₛ* denotes the solid fraction;
S4, considering flow of a liquid phase in a dendrite network through permeation during solidification, wherein a permeability of the permeation is related to the solid fraction, and establishing a momentum conservation equation: $\frac{\partial \left(ρU\right)}{\partial t} + ∇ ⋅ \left(ρUU\right) = - ∇ P + ∇ ⋅ \left({μ}_{eff}∇U\right) + ρg - {S}_{Darcy}$ wherein
*U_{eff}* denotes an effective viscosity; and
*S_{Darcy}* denotes a Darcy source term for permeation, and is a function of the solid fraction *fₛ*; and
S5, establishing, in combination with a specific shape of the ingot, a coupled solving model for a temperature field and a flow field according to the energy conservation equation and the momentum conservation equation, and further calculating the temperature field and the flow field in the casting process.

2. The method for simulating the casting process based on the cooling rate as claimed in claim 1, wherein the obtaining the cooling rates *Ṫ* at different positions P of the ingot in S1 comprises: performing a measurement by embedding thermocouples, or performing a calculation by establishing a numerical simulation model for the casting process.

3. The method for simulating the casting process based on the cooling rate as claimed in claim 2, wherein the establishing the numerical simulation model for the casting process comprises: establishing, based on a Scheil solidification model or a Level model, the numerical simulation model for the casting process in combination with the shape of the ingot.

4. The method for simulating the casting process based on the cooling rate as claimed in claim 1, wherein calculating the solidification solid fraction curve *fₛ*(*T*, *Ṫ*) of the corresponding position P of the ingot according to the different cooling rates *Ṫ* in S2 comprises: calculating, according to the different cooling rates *Ṫ*, solidification curves *f*s(*T*, *Ṫ*) corresponding to the different cooling rates *Ṫ* respectively through a Back diffusion model.

5. The method for simulating the casting process based on the cooling rate as claimed in claim 1, wherein the calculating the solidification solid fraction curve *f*s(*T*, *Ṫ*) of the corresponding position P of the ingot according to the different cooling rates *Ṫ* in S2 comprises: measuring solidification curves *fₛ*(*T*, *Ṫ*) at the different cooling rates *Ṫ* through differential scanning calorimetry (DSC).

6. The method for simulating the casting process based on the cooling rate as claimed in claim 1, wherein in S5, simulation software is used to establish the coupled solving model for the temperature field and the flow field in combination with the shape of the ingot.

7. The method for simulating the casting process based on the cooling rate as claimed in any one of claims 1 to 6, further comprising S6: processing a simulation result of the casting process.

8. The method for simulating the casting process based on the cooling rate as claimed in claim 7, wherein the processing comprises: extracting, according to the temperature field and the flow field calculated in S5 and in combination with different solid fractions, liquid pool morphology at different positions.

9. The method for simulating the casting process based on the cooling rate as claimed in claim 7, wherein the processing comprises: obtaining heat release of solidification in the casting process.
